(19) Europäisches Patentamt
European Patent Office
Office européen des brevets

(11) Veröffentlichungsnummer: **0 292 635**
**B1**

(12) **EUROPÄISCHE PATENTSCHRIFT**

(45) Veröffentlichungstag der Patentschrift: **23.01.91**

(51) Int. Cl.⁵: **B 27 B 5/06**

(21) Anmeldenummer: **88100114.3**

(22) Anmeldetag: **19.10.85**

(60) Veröffentlichungsnummer der früheren Anmeldung nach Art. 76 EPÜ: **0 184 642**

(54) **Werkstückvorschubvorrichtung zum Anbau an Plattenaufteilmaschinen.**

(30) Priorität: **08.12.84 DE 3444929**
**21.06.85 DE 3522278**

(43) Veröffentlichungstag der Anmeldung:
**30.11.88 Patentblatt 88/48**

(45) Bekanntmachung des Hinweises auf die Patenterteilung:
**23.01.91 Patentblatt 91/04**

(84) Benannte Vertragsstaaten:
**AT CH FR GB IT LI**

(56) Entgegenhaltungen:
**DE-A-1 628 987**
**US-A-3 483 904**

(73) Patentinhaber: **Jenkner, Erwin**
**Lindenstrasse 13**
**D-7261 Gechingen-Bergwald (DE)**

(72) Erfinder: **Jenkner, Erwin**
**Lindenstrasse 13**
**D-7261 Gechingen-Bergwald (DE)**

(74) Vertreter: **Becker, Maria, Dipl.-Phys.**
**Auf dem Haigst 29 Postfach 70 01 47**
**D-7000 Stuttgart 70 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 292 635 B1

## Beschreibung

Die Erfindung betrifft eine Plattenvorschubvorrichtung zum Anbau an Plattenaufteilmaschinen, mit den Merkmalen des Oberbegriffes von Anspruch 1.

Bei der Herstellung plattenförmiger Werkstücke, beispielsweise zur Herstellung von Möbeln, wird die Komplettierung solcher Werkstücke mit Konstruktionsbohrungen, wie Flächen- und Stirnbohrungen, vorgenommen, nachdem die Werkstücke auf Maß formatiert vorliegen. Die Werkstücke werden also zunächst auf einer Plattenaufteilmaschine aus einem Plattenzuschnitt hergestellt und danach in einem weiteren Arbeitsgang auf eine Bohrmaschine verbracht, auf der dann die Flächenbohrungen hergestellt werden.

Bohrungen in die Stirnkante bzw. in Stirnkanten von Werkstücken sind wiederum mittels einer anderen Bohrmaschine herzustellen.

Das Aufteilen der Werkstücke auf Plattenaufteilmaschinen bzw. -sägen erfolgt üblicherweise vollautomatisch nach einem computergesteuerten Arbeitsprogramm, zu dessen Durchführung die Plattenaufteilmaschine mit einer einen programmgesteuerten Plattenschieber aufweisenden Plattenvorschubvorrichtung kombiniert ist.

Der Erfindung liegt nun die Aufgabe zugrunde, aufzuzeigen, wie es sich umgehen lässt, auf der Plattenaufteilmaschine aufgeteilte Werkstücke zum flach- und/oder stirnseitigen Bohren noch auf eine Bohrmaschine auflegen zu müssen.

Diese Aufgabe wird durch die kennzeichnenden Merkmale des Anspruchs 1 gelöst.

Gemäss der Erfindung ist die Plattenvorschubvorrichtung mit einer Bohrvorrichtung zum flach- und/oder stirnseitigen Bohren ausgestattet, so dass im Zuge des Aufteilens plattenförmiger Werkstücke die dabei anfallenden Plattenzuschnitte zugleich auch gebohrt werden können, ohne sie hierzu von der Plattenaufteilmaschine herunternehmen zu müssen. Die Erfindung bietet hierbei den wesentlichen Vorteil, dass in Betrieben, die bereits über eine Plattenaufteilmaschine verfügen, durch Zukauf der erfindungsgemässen Plattenvorschubvorrichtung es möglich ist, plattenförmige Werkstücke automatisch aufzuteilen und entsprechend zu bohren.

Vorteilhafte Ausgestaltungen der Erfindung sind Gegenstand von Unteransprüchen.

In der Zeichnung ist ein Ausführungsbeispiel der Erfindung dargestellt. Es zeigen:

Fig. 1 eine Draufsicht einer Plattenaufteilanlage, die eine mit einer einen programmierbaren Werkstückschieber aufweisenden Werkstückvorschubvorrichtung verkettete Plattenaufteilmaschine aufweist;

Fig. 2 eine Seitenansicht der Plattenaufteilanlage;

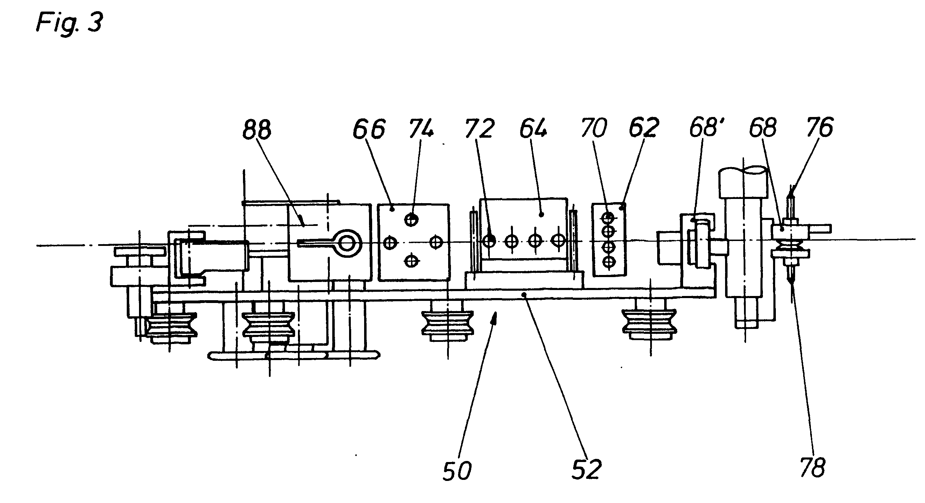

Fig. 3 eine Draufsicht auf die Bohrvorrichtung der Werkstückvorschubvorrichtung;

Fig. 4 einen Schnitt entlang der Linie 4—4 der Fig. 3, welcher das Bohraggregat zum stirnseitigen Bohren veranschaulicht, das in Arbeitsposition gefahren ist;

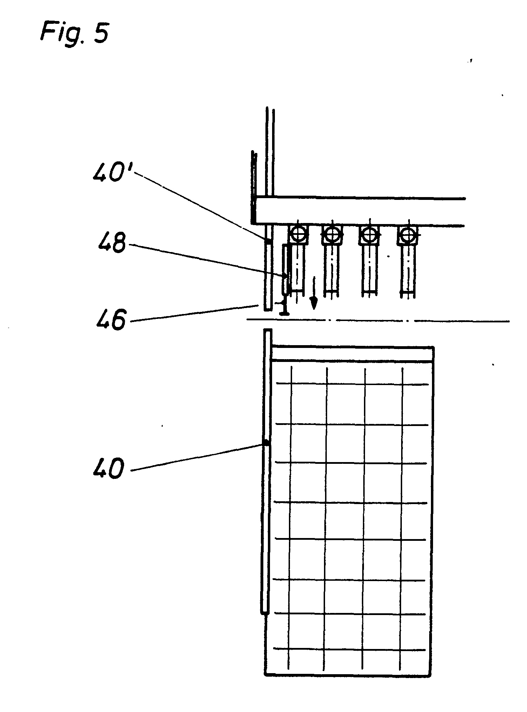

Fig. 5 einen Ausschnitt der Draufsicht der Plattenaufteilanlage gem. Fig. 1, wobei sich der Werkstückschieber im Bereich seiner vorderen Endstellung und eine an diesem vorgesehene Anschlagvorrichtung sich in Anschlagposition befindet;

Fig. 6 eine schaubildliche Ansicht eines schrankartigen, aus plattenförmigen Werkstücken hergestellten Möbels, wie sie mit der Plattenaufteilanlage herstellbar sind;

Fig. 7 eine Draufsicht auf eine Rohplatte zur Herstellung streifenförmiger Plattenzuschnitte auf der Plattenaufteilanlage;

Fig. 8 in Draufsicht die aus der Rohplatte hergestellten Plattenzuschnitte, an welche die an diesen anzubringenden Bohrungen angedeutet sind;

Fig. 9 eine Darstellung ähnlich Fig. 2, wobei die Plattenvorschubvorrichtung mit einer zusätzlichen Bohr- und Montagevorrichtung ausgestattet ist;

Fig. 10 eine Ansicht der Bohr- und Montagevorrichtung in Richtung des Pfeiles A der Fig. 9 gesehen, wobei die Vorrichtung in ihrer Ausgangsstellung gezeigt ist;

Fig. 11 die Darstellung gem. Fig. 10, wobei die Vorrichtung in ihrer Arbeitsstellung gezeigt ist.

Bei der im folgenden erläuterten, aus einer Plattenaufteilmaschine 10 und einer erfindungsgemässen Werkstückvorschubvorrichtung 12 gebildeten Plattenaufteilanlage ist die Bohrvorrichtung 50 zum flach- und/oder stirnseitigen Bohren von Plattenzuschnitten in das Gestell der Plattenaufteilmaschine 10 eingezeichnet.

Im Gegensatz dazu ist bei der erfindungsgemässen Konstruktion die Bohrvorrichtung 50 an der an den Werkstückauflagetisch 18 der Plattenaufteilmaschine 10 anzuschliessenden Seite des Plattenaufnahmetisches 28 angeordnet. Die Bohrvorrichtung 50 bildet demgemäss mit dem Werkstückauflagetisch 18 der Werkstückvorschubvorrichtung 12 eine Baueinheit, die an Plattenaufteilmaschinen 10 beigestellt werden kann.

Die sich auf die Anordnung der Bohrvorrichtung 50 beziehenden Aussagen der folgenden Konstruktionserläuterungen sind deshalb zur Werkstückvorschubvorrichtung 12 in Beziehung zu setzen.

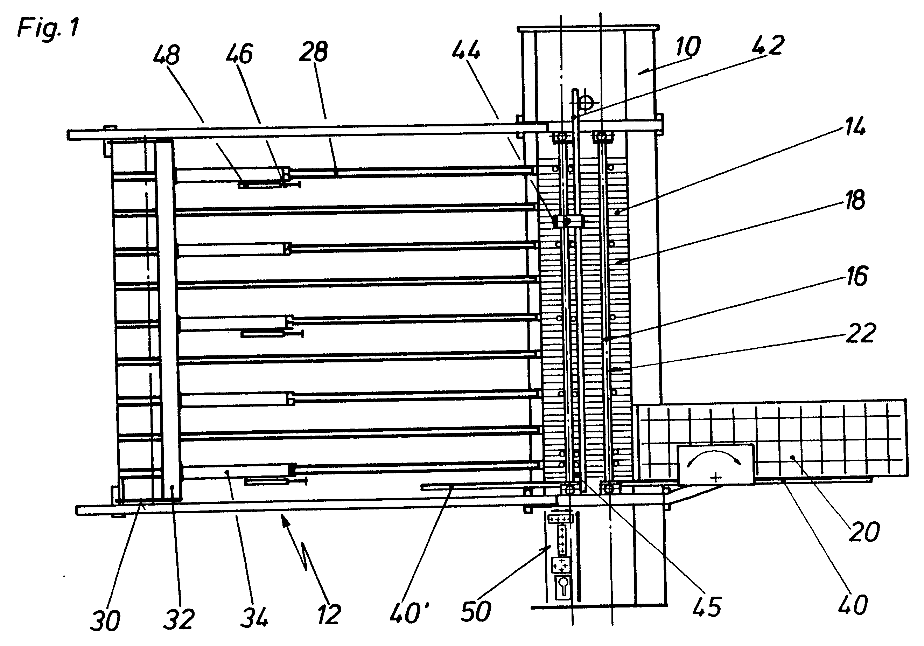

Die in Fig. 1 gezeigte Plattenaufteilanlage weist eine Plattenaufteilmaschine 10 an sich bekannter Bauart sowie eine Werkstückvorschubvorrichtung 12 an sich bekannter Bauart auf, die miteinander verkettet sind.

Die Plattenaufteilmaschine 10 weist einen Werkstückauflagetisch 18 mit einer auf diesem angeordneten Werkstückspannvorrichtung, beispielsweise in Form eines pneumatisch vertikal beweglichen Druckbalkens 16, auf.

Dem die horizontale Werkstückauflagefläche 14 aufweisenden Maschinentisch 18 ist in bekannter Weise ein Werkstückanlegetisch 20 zugeordnet, der beispielsweise im Bereich des linken Endes des Werkstückauflagetisches vorgesehen ist.

Längs des Werkstückauflagetisches 18 erstreckt sich in diesem ein die Trennebene der Plattenaufteilmaschine 10 definierender Sägeschlitz 22 unterhalb des Druckbalkens 16.

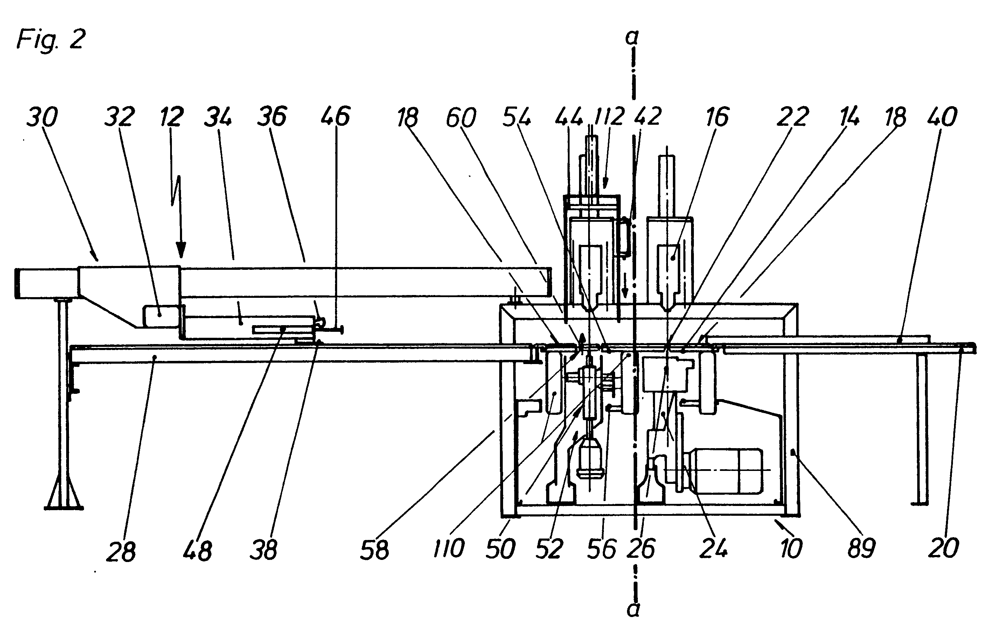

Mit 24 ist als Ganzes ein Sägewagen bezeichnet, der an der Unterseite des Werkstückauflagetisches entlang einer Führung parallel zum Sägeschlitz 22 verfahrbar ist. Dieser Sägewagen 24 ist vorzugsweise mit zwei Kreissägeblättern 26 ausgestattet, die auf zueinander parallelem Wellen drehfest angeordnet und im seitlichem Abstand zueinander einstellbar vorgesehen sind. In Fig. 2 ist lediglich eines dieser Kreissägeblätter dargestellt. Das eine dieser beiden Kreissägeblätter dient zum Vorritzen oder auch zum Trennen.

Die Werkstückvorschubvorrichtung 12 ist an die hintere Längsseite des Werkstückauflagetisches 18 angeschlossen und weist eine Vielzahl von parallel zueinander in einer gemeinsamen horizontalen Ebene angeordneten Werkstückauflageleisten auf, die sich senkrecht zum Sägeschlitz 28 erstrecken und einen Werkstückaufnahmetisch 28 bilden, der eine sich im Abstand oberhalb des Werkstückaufnahmetisches 28 befindende Traverse 32 aufweist, an der in seitlichem Abstand voneinander eine Vielzahl von vorzugsweise pneumatisch betätigbaren Werkstückspannzangen 34 angeordnet ist, deren Spannschenkel 36 und 38 (Fig. 2) sich in Richtung Werkstückauflagetisch 18 erstrecken.

Der Werkstückanlegetisch 20 ist in bekannter Weise mit einem sich senkrecht zum Sägeschlitz 22 erstreckenden Seitenanschlag 40 ausgestattet, der sich mit einem Teilstück 40' hinter dem Sägeschlitz 22 fortsetzt. Diesem Seitenanschlag ist an der Plattenaufteilmaschine 10 oberhalb ihrer Werkstückauflagefläche 14 ein entlang einer Führungstraverse 42 verschiebbarer Queranschlag 44 zugeordnet, mit dessen Hilfe sich auf den Werkstückanlegetisch 20 aufgelegte Werkstücke an den Seitenanschlag 40, 40' anlegen lassen. In der Nichtgebrauchsstellung des Queranschlages 44 befindet er sich im Breich des rechten Endes des Werkstückauflagetisches 18 in einer angehobenen Ausgangsposition.

Mit 46 ist ein weiterer Anschlag bezeichnet, der aus einer Anschlagvorrichtung 48 senkrecht zum Sägeschlitz 22 horizontal ausfahrbar ist, die auf der Seite des Seitenanschlages 40, 40' an der Traverse 32 des Werkstückschiebers 30 angeordnet ist. Vorzugsweise befindet sich auf der gegenüberliegenden Seite der Traverse 32 ebenfalls eine solche Anschlagvorrichtung 48. Ferner können im Breich zwischen diesen beiden Anschlagvorrichtungen 48 weitere gleichartige Anschläge angebracht sein.

Die beiden Anschlagvorrichtungen 48 dienen dazu, aufzuteilende Plattenzuschnitte oder Rohplatten, die in Plattenzuschnitte aufzuteilen sind, vor Durchführung des ersten Trennschnittes relativ zum Sägeschlitz 22 zur Durchführung eines ersten Besäumschnittes aufzurichten.

Die Werkstückvorschubvorrichtung 12 ist mit einer als Ganzes mit 50 bezeichneten Werkstückbohr- und Montagevorrichtung ausgestattet, mit deren Hilfe sich in herzustellende plattenförmige Werkstücke sowohl Flächenbohrungen als auch Bohrungen in Stirnkanten herstellen lassen.

Bei einem bevorzugten Ausführungsbeispiel der Plattenaufteilanlage ist diese Vorrichtung 50 auf der Seite des Werkstückauflagetisches 18 unterhalb der Werkstückauflageebene der Werkstückvorschubvorrichtung 12 angeordnet und an einem spieziellen Führungsgestell 110 der Werkstückvorschubvorrichtung 12 quer zu deren Vorschubrichtung geführt. Zweckmässig ist die Werkstückvorschubvorrichtung 12 noch mit einer auf das Führungsgestell 110 aufgebauten Spannvorrichtung 112 ausgestattet. Sie könnte aber auch oberhalb der letzteren vorgesehen sein.

Die Bohr- und Montagevorrichtung 50 weist einen schlittenartigen Träger 52 auf, der an der Werkstückvorschubvorrichtung 12 parallel zum Sägeschlitz 22 auf übereinander angeordneten Führungsschienen 54 und 56 verschiebbar und feststellbar geführt ist. Oberhalb der Bohr- und Montagevorrichtung 50 ist zwischen Werkstückauflagetisch 18 und Werkstückvorschubvorrichtung 12 eine sich parallel zum Sägeschlitz 22 erstreckende spaltförmige Aussparung 58 vorgesehen, die mittels einer Klappe 60 verschliessbar ist, sofern die Bohr- und Montagevorrichtung 50 nicht benötigt wird. Diese Klappe 60 ist zum Öffnen der spaltförmigen Aussparung 58 nach unten wegklappbar.

Auf dem schlittenartigen Träger 52 sind beispielsweise vier Bohrköpfe 62, 64, 66, 68 angeordnet, von denen die Bohrköpfe 62 und 64 jeweils eine Reihe mit beispielsweise vier Bohrspindeln 70 bzw 72 aufweisen, die einander räumlich entsprechend einem gewünschten Bohrbild zugeordnet sind. Dies trifft auch für die Bohrspindeln 74 des Bohrkopfes 66 zu.

Die einzelnen Borhköpfe sind nebeneinander angeordnet, wobei die gegenseitige Zuordnung der Bohrköpfe 62 und 64 so getroffen ist, dass deren Reihen von Borhspindeln 70, 72 in horizontaler Ebene zueinander senkrecht verlaufen. Demgemäss erstreckt sich die eine Bohrspindelreihe senkrecht und die andere Bohrspindelreihe parallel zum Sägeschlitz 22. Die Bohrköpfe 62, 64 und 66 dienen zur Herstellung von Flächenbohrungen in der Unterseite plattenförmiger Werkstücke bzw. von Plattenzuschnitte, wozu die Bohrköpfe in geeigneter Weise relativ zum Träger 52 in vertikaler Richtung nach oben zu steuern sind. Dies kann beispielsweise pneumatisch erfolgen.

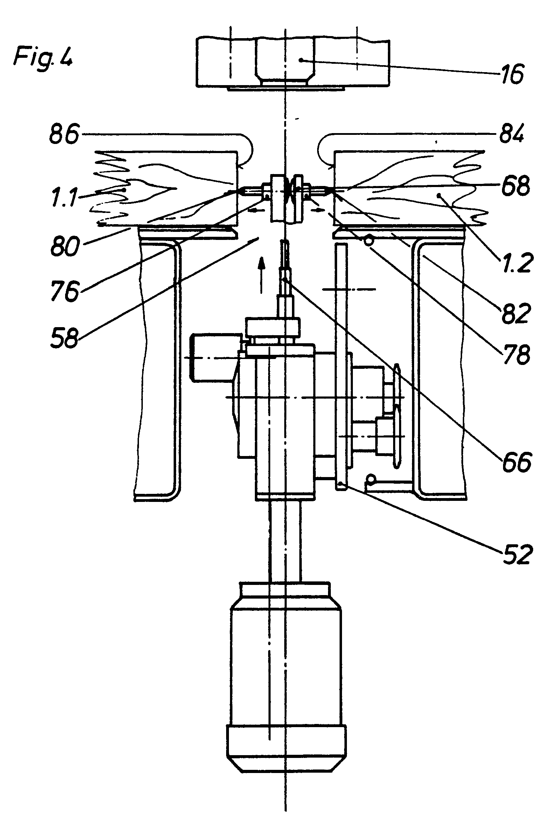

Der Bohrkopf 68 dient zur Herstellung von Bohrungen in Stirnkanten von Werkstücken. Hierzu ist dieser Bohrkopf mit einem säulenförmigen Ansatz 68' ausgestattet, der im Bereich seines oberen Endes zwei vorzugsweise koaxial zueinander angeordnete Bohrspindeln 76 und 78 aufweist, die horizontal gelagert sind. Beide Bohrspindeln sind vorteilhaft gemeinsam oder getrennt in gleicher oder gegenläufiger Drehrichtung antreibbar. Der Bohrkopf 68 ist am Träger 52 in vertikaler Richtung, beispielsweise pneumatisch verstellbar, angeordnet, so dass er bei Nichtgebrauch, analog zu den anderen Bohrköpfen, nach unten abtauchen kann, um die spaltförmige Aussparung 58 mittels der Klappe 60 verschliessen zu können. Aus Fig. 4 ist ersichtlich, dass in der Arbeitsposition des Bohrkopfes 68 die Bohrspindeln 76 und 78 bzw. in diese eingesetzte Bohrer 80, 82 sich in Richtung einander zugekehrter Stirnflächen 84 und 86 von Werkstücken erstrecken.

Der Träger ist ausserdem mit einer Montagevorrichtung 88 ausgestattet, mit deren Hilfe sich beispielsweise Beschlagteile selbsttätig in Flächenbohrungen einpressen lassen. Selbstverständlich können auch mehrere solcher Montagevorrichtungen vorgesehen sein. Der schlittenartige Träger 52 ist mittels einer Transportvorrichtung relativ zu den mit Bohrungen auszustattenden Plattenzuschnitten oder plattenförmigen Werkstücken verstellbar und feststellbar, was, analog zum Werkstückschieber 30, programmgesteuert erfolgen kann. Die Bohr- und Montagevorrichtung 50 kann, je nachdem, welcher bzw. welche Bohrköpfe benötigt werden, in eine oder mehrere vorbestimmte Bearbeitungsstellungen gesteuert werden, wonach die Bohrköpfe 62 bis 68 und auch die Montagevorrichtung 88 bevor ihre Bohrspindeln bzw. Bohr- und Montagevorrichtungen in Funktion treten.

Das die Bohr- und Montagevorrichtung 50 sowie den Sägewagen 24 führende Gestell der Werkstückvorschubvorrichtung 12 ist so ausgelegt, dass sich die Bohr- und Montagevorrichtung 50 in ihrer Nichtgebrauchsstellung vorteilhaft seitlich der Werkstückvorschubvorrichtung 12 befindet und somit die Klasse 60 zum Verschliessen der Aussparung 58 betätigt werden kann.

Mit Hilfe der beschriebenen Plattenaufteilanlage lässt sich das erfindungsgemässe Verfahren folgendermassen durchführen:

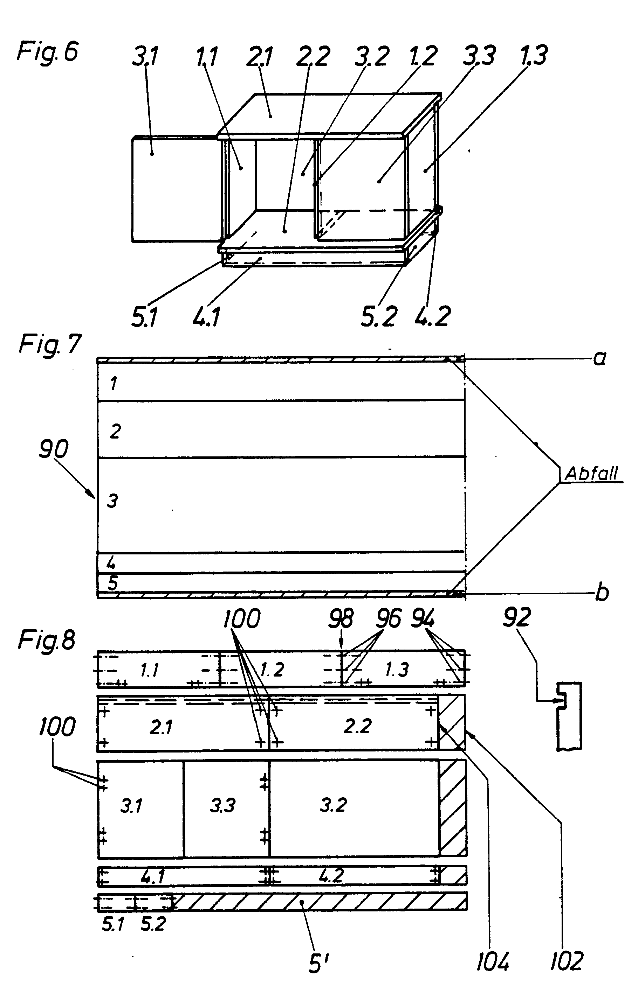

Es sei angenommen, dass flach- und stirnseitig gebohrte, formatierte plattenförmige Werkstücke zur Herstellung eines schrankartigen Möbels gemäss Fig. 6 hergestellt werden sollen. Dieses Möbel besteht aus einer Vielzahl von Werkstücken 1,1—5,2, die in einem Zuge formatiert und ensprechend gebohrt gefertigt werden sollen. Hierzu wird eine Rohplatte 90 entsprechender Grösse auf den Werkstückauflagetisch 18 aufgelegt. Diese Rohplatte 90, die eine grossformatige Spannplatte sein kann, wird z.B. in für die Fertigung des Möbels erforderliche fünf streifenförmige Plattenzuschnitte aufgeteilt, wie die Fig. 8 zeigt. Dieses Plattenaufteilen kann automatisch erfolgen, indem in einen Steuerungscomputer der Plattenaufteilmachine 10 ein entsprechendes Aufteilprogramm eingegeben wird, das extern von einem Rechner erstellt worden ist. Die Programmübertragung kann on line oder mittels eines Datenträgers, beispielsweise eines Lochstreifens oder durch Eintippen von Hand in die Tastatur der Steuerung, erfolgen.

Nach Auflegen der Roh- bzw. Spannplatte 90 und Anschlagen derselben am Seitenanschlag 40, 40', was mit Hilfe des Queranschlages 44 bewerkstelligt wird, wird zunächst der Werkstückschieber 30 programmgesteuert in Richtung Sägeschlitz 22 der Plattenaufteilmaschine 10 gesteuert und in einem vorbestimmten Abstand zu diesem stillgesetzt. Danach fahren die Anschläge 46 der Anschlagvorrichtungen 48 des Werkstückschiebers 30 aus und fixieren die den Spannzangen 34 zugekehrte Stirnkante der Rohplatte in einem vorbestimmten Abstand zum Sägeschlitz 22. Danach wird die Rohplatte mit Hilfe des Druckbalkens 16 gespannt und ein erster Besäumschnitt a durchgeführt, um dadurch eine zum Seitenanschlag 40, 40' exakt rechtwinklige Werkstückanschlagkante zu schaffen. Danach wird das Werkstück entspannt und manuell in die Spannzangen 34 des Werkstückschiebers bis zum Anschlag eingeschoben. Nach einem Startimpuls erfolgt dann das Spannen in den Spannzangen, der Werkstückschieber 30 wird in seine Ausgangsstellung zurückgesteuert und nimmt hierbei die Rohplatte mit, wonach zunächst ein weiterer Plattenanschicht b durchgeführt wird, um zur zuerst erzeugten Besäumkante eine dieser gegenüberliegende exakt parallele weitere Besäumkante herzustellen. Danach wird die Rohplatte in die in Fig. 8 gezeigte Plattenzuschnitte 1—5 aufgeteilt.

Bei der Durchführung der Längsaufteilschnitte kann mit Hilfe des Sägewagens 24 neben den Trennschnitten beispielsweise in die beiden Plattenzuschnitte 1 und 2 zugleich jeweils eine erforderliche Längsnut 92 eingefräst werden, um später z.B. die Rückwand des Möbels in diese Nuten formschlüssig in Eingriff bringen zu können.

Die nunmehr vorliegenden streifenförmigen Plattenzuschnitte 1—5 werden durch die Bedienungsperson anschliessend einzeln um 90° gedreht, mit ihrer einen Längsseite an den Seitenanschlag 40, 40' angelegt und mit der dem Werkstückschieber 30 zugekehrten Stirnseite zunächst an dessen gemäss Fig. 1 linken Anschlag 46 der Anschlagvorrichtung 48 angelegt, wozu der Werkstückschieber 30 zunächst in Richtung Plattenaufteilmaschine in eine Bereitschaftsstellung gesteuert wird. Sind mehrere gleichartig zu bearbeitende Plattenzuschnitte erforderlich, so können diese parallel zueinander in die vorstehend erläuterte Position gebracht werden.

Nach einem Startimpuls wird mittels des Druckbalkens 16 der Plattenzuschnitt gespannt und mit Hilfe des Sägewagens 24 wieder ein stirnseitiger Besäumschnitt durchgeführt. Nach dem Computerprogramm wird nun dieser Plattenzuschnitt zunächst entweder nur mit Bohrungen an einander gegenüberliegenden Stirnkanten ausgestattet oder mit solchen an dessen einer Flachseite vorzusehenden Flächenbohrungen.

Gemäss Fig. 8 ist der Plattenzuschnitt 1 lediglich mit jeweils einer Anzahl von stirnseitig vorzusehenden Bohrungen 94 und 96 auszustatten. Hierzu ist nach Durchführung eines ersten stirnseitigen Besäumschnittes die Bohr- und Montagevorrichtung 50 in ihre Einsatzposition zu verfahren, in der hierzu anschliessend der Bohrkopf 68 für das stirnseitige Bohren vertikal nach oben in seine in Fig. 4 dargestellte Arbeitsposition gesteuert wird. Danach werden mit Hilfe der Bohrspindel 76 nacheinander die drei Stirnbohrungen 94 eingebracht, wozu der schlittenartige Träger 52 nach Fertigstellung der ersten Bohrung parallel zum Sägeschlitz bzw. quer zur entsprechenden Werkstückstirnkante in eine neue Bohrposition zu verfahren ist, bevor die Bohrspindel 76 ihre Vorschubbewegung ausführt, wozu das Bohraggregat 68 auf dem Träger 52 senkrecht zur Längserstreckung des Sägeschlitzes 22 entsprechend verstellt wird.

Sind die Stirnbohrungen 94 hergestellt, taucht der Bohrkopf 68 so weit ab, dass der Plattenzuschnitt 1 mit dem gebohrten Stirnende in die Spannzangen 34 des Werkstückschiebers 30 manuell eingeschoben und dort gespannt werden kann. Anschliessend fährt der Werkstückschieber 30 programmgesteuert in eine erste Mitnahmestellung zurück, durch die der Plattenzuschnitt 1 zum Sägeschlitz 22 derart eingestellt wird, dass anschliessend ein Trennschnitt 98 durchgeführt werden kann. Ist dieser erfolgt, wird der Werkstückschieber 30 gemäss dem Steuerprogramm erneut um einen solchen Weg in Richtung seiner hinteren Ausgangsstellung gesteuert und wiederum festgelegt, so dass nunmehr die zuletzt hergestellte Stirnkante 86 des formatierten Werkstückes 1, 3 sich in einer Position befindet, in der mit Hilfe der Bohrspindel 78 des Bohraggregates 68 die stirnseitigen Bohrungen 96 eingebracht werden können (s. Fig. 4). Danach wird dieses Werkstück 1,3 der Maschine entnommen und der restliche Teil des Plattenzuschnittes 1 in der vorbeschriebenen Weise in der Einrichtung bearbeitet, also programmgesteuert zunächst die eine Stirnfläche des in der Folge herzustellenden Werkstückes 1,2 gebohrt, danach der Plattenzuschnitt entsprechend nach hinten verschoben, anschliessend durchtrennt, und schliesslich werden die restlichen Stirnbohrungen hergestellt. Damit liegen schliesslich drei formatierte plattenförmige und stirnseitig gebohrte Werkstücke 1,1—1,3 vor. In der gleichen Weise wird auch der schmale streifenförmige Plattenzuschnitt 5 bearbeitet, wobei hierbei das Teilstück 5' das Plattenzuschnittes 5 als Abfall anfällt.

Eine weitere vorteilhafte Bearbeitungsmöglichkeit der Plattenzuschnitte 1 und 5 kann darin bestehen, den Plattenzuschnitt 1 an einem Stirnende zu besäumen, an dieser Stirnseite zu bohren, danach in die Spannzangen 34 zu schieben, zu spannen und den Plattenzuschnitt über seine gesamte Länge zurückzuziehen und an seinem anderen Stirnende zu besäumen. Nach diesem Besäumschnitt wird die hergestellte Stirnkante gebohrt, worauf der Plattenzuschnitt 1 in die dritte Schnittposition eingestellt wird, um das Teilstück 1,3 vom restlichen Teilstück des Plattenzuschnittes abzutrennen bzw. den Trennschnitt 98 durchzuführen. In der Folge wird das restliche Teilstück 1,1; 1,2 zurückgezogen, um für das stirnseitige Bohren positioniert zu werden. Das zuvor abgetrennte Werkstück 1,3 wird manuell entlang dem Anschlag 40, 40' gegen einen zuvor aktivierten Anschlag 46 geschoben, und nach einem Startimpuls wird der weitere Arbeitsablauf gestartet, nämlich Spannen und wechselseitiges oder gleichzeitiges stirnseitiges Bohren. Danach ist das fertige Werkstück 1,3 zu entnehmen; das restliche Teilstück 1,1 und 1,2 wird in die nächste Schnittposition eingestellt und danach der Trennschnitt durchgeführt. Anschliessend wiederholt sich der vorbeschriebene Verfahrens- bzw. Bearbeitungsablauf.

Ferner kann folgendermassen gearbeitet werden:

Sind die Stirnbohrungen 94 hergestellt, taucht der Bohrkopf 68 so weit ab, dass der Plattenzuschnitt 1 mit dem gebohrten Stirnende in die Spannzangen 34 des Werkstückschiebers 30 manuell eingeschoben und dort gespannt werden kann. Anschliessend zieht der Werkstückschieber 30 programmgesteuert das Werkstück in seiner gesamten Länge zurück, positioniert für den Besäumschnitt. Nach Ausführung des Besäumschnittes wird das Werkstück programmgesteuert weiter für die erste stirnseitige Bohrposition zurückgezogen, gespannt, stirnseitig gebohrt, anschliessend in entgegensetzter Richtung vorgeschoben um eine Werkstücklänge, durchtrennt, wieder zurückgezogen in die stirnseitige Bohrposition. Der abgetrennte Werkstückteil wird gegen den zurückgezogenen Werkstückteil vorgeschoben an den Anschlag 45. Beide Werkstücke werden in sich gegenüberliegenden Stirnseiten gespannt und in beiden Seiten die Stirnbohrungen mit den Bohrspindeln 76 und 78 eingebracht. Das vordere Werkstück ist fertig, wird entnommen und das im Schieber befindliche Werkstück wieder um eine Werkstücklänge vorgeschoben, positioniert, durchtrennt. Alle weiteren Schritte wiederholen sich so lange, bis der Plattenzuschnitt aufgearbeitet ist.

Die übrigen Plattenzuschnitte 2—4 sind bei dem gezeigten Möbel gemäss Fig. 6 lediglich mit Flächenbohrungen 100 auszustatten. Hierzu wird wie folgt verfahren:

Nach einem Startimpuls wird der Werkstückschieber 30 in eine vordere Anschlagposition gesteuert, wobei der Anschlag 46 ausgefahren und die Stirnkante 102 an diesen angelegt wird. Daraufhin wird z.B. der Plattenzuschnitt 2 gespannt. Danach wird ein Besäumschnitt zur Erzeugung einer Stirnkante 104 durchgeführt. Die erzeugte Stirnkante 104 wird in den Spannzangen 34 zum Anschlag gebracht, wonach der Plattenzuschnitt in diese gespannt und durch den Werkstückschieber 30 durch Verstellen desselben in Richtung seiner hinteren Ausgangsposition relativ zu der in ihre Bearbeitungsstellung gesteuerten Bohr- und Montagevorrichtung 50 so verschoben und danach festgespannt wird, dass anschliessend in vorbestimmten Bereichen des Plattenzuschnittes mit Hilfe der Bohrköpfe 62 und 64 oder gegebenenfalls mit Hilfe des Bohrkopfes 66 die entsprechenden Bohrbilder für die Flächenbohrungen 100 über die gesamte Länge des Plattenzuschnittes erzeugt werden können. Sind sämtliche Flächenbohrungen in die eine Flachseite des Plattenzuschnittes 2 bzw. 3 oder 4 eingebracht, wird der Plattenzuschnitt mit Hilfe des Werkstückschiebers 30 taktweise in die entgegengesetzte Richtung in vorbestimmte Positionen verschoben, nach jedem Vorschub mittels des Druckbalkens 16 auf dem Werkstückauflagetisch 18 festgelegt und anschliessend jeweils durchtrennt. Hierbei fallen dann die einzelnen Werkstück 2,1; 2,2 bzw. 3,1; 3,2 bzw. 4,1; 4,2 an, die dann fertig formatiert vorliegen und mit sämtlichen Flächenbohrungen ausgestattet sind.

Sind Werkstücke sowohl mit Flächenbohrungen als auch mit stirnseitig anzuordnenden Bohrungen auszustatten, so kann man zuerst in die Plattenzuschnitte sämtliche Flächenbohrungen einbringen und danach, wie vorstehend erläutert, die stirnseitigen Bohrungen 94, 96 gemeinsam mit dem Auftrennen der Plattenzuschnitte vornehmen.

Es ist klar, dass zur Durchführung des Verfahrens auch eine Plattenaufteilanlage geeignet ist, die nicht computergesteuert ist.

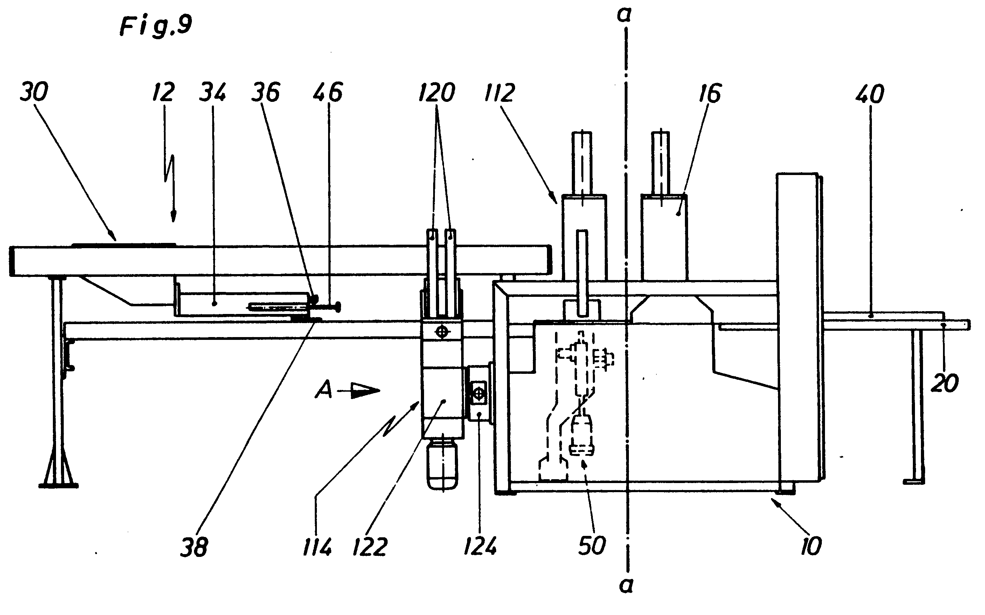

Die Fig. 9—11 zeigen eine modifizierte Ausführungsform der Werkstückvorschubvorrichtung 12. Diese zeichnet sich durch eine Bohr- und Montagevorrichtung 114 für Beschläge, beispielsweise in Form von Scharnierbeschlägen, aus, die, in Vorschubrichtung der Werkstückvorschubvorrichtung 12 gesehen, vor der Bohrvorrichtung 50 an der einen Längsseite der Werkstückvorschubvorrichtung 12 vorgesehen ist.

Sie ist mit einem unterhalb der Werkstückauflageebene angeordnete, vertikal verstellbaren Bohrkopf 116, mit einer sich oberhalb desselben vorgesehenen Werkstückspannvorrichtung 118 sowie mit einer Magaziniervorrichtung 120 für die zu verarbeitenden Beschläge ausgestattet.

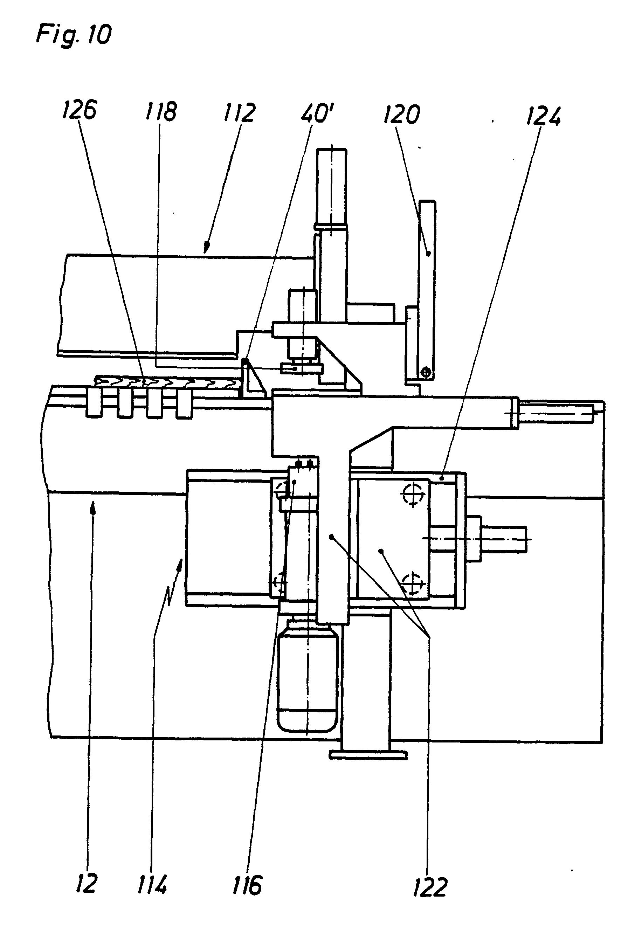

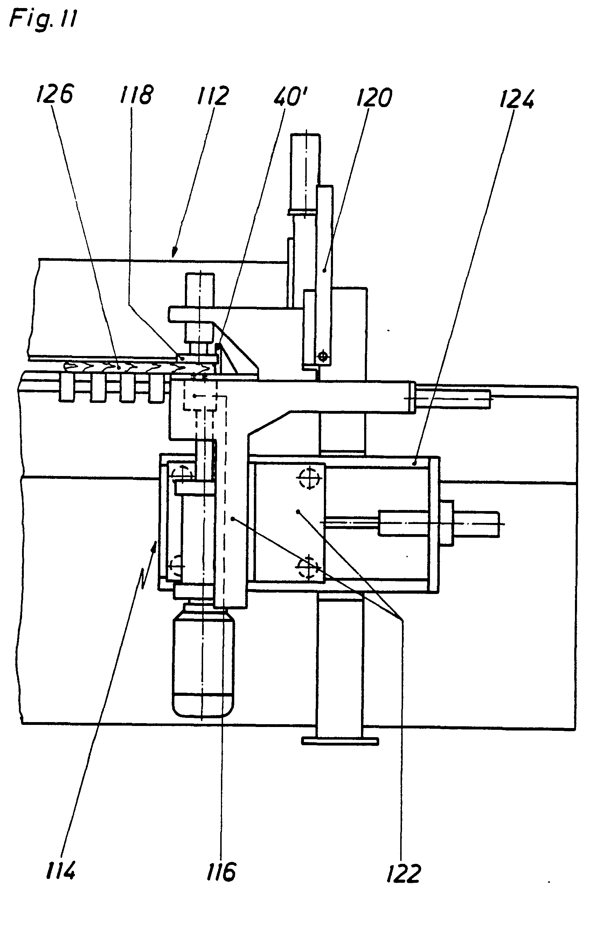

Die Vorrichtungen 116, 118, 120 sitzen auf einem Trägerschlitten 122, der eintlang einer stationären Schlittenführung 124 quer zur Vorschubrichtung horizontal aus einer Ruhestellung gem. Fig. 10 in eine Arbeitsstellung gem. Fig. 11 steuerbar ist.

Nach Erreichen der Arbeitsstellung, in welcher die Spannvorrichtung 118 das auf der Werkstückvorschubvorrichtung 12 aufliegende Werkstück 126 an einer Seitenkante übergreift, wird diese zum Festlegen des Werkstückes 126 aktiviert, worauf zunächst der Bohrkopf 116 hochfährt und die entsprechenden Konstruktionsborhungen von unten her in das Werkstück 126 einbringt. Danach bewegt sich der Bohrkopf 116 zunächst wieder nach unten, worauf mittels der Maganiziervorrichtung 120 einer der gespeicherten Beschläge unter die Konstruktionsbohrungen transportiert und durch anschliessendes Wiederhochfahren des Bohrkopfes 116 in die Bohrungen eingepresst wird. Dnach fahren alle Vorrichtungen 116, 118, 120 in ihre Ausgangsstellungen zurück, und der Werkstückvorschub kann mittels der Werkstückvorschubvorrichtung 12 zur weiteren Werkstückverarbeitung fortgesetzt werden.

Unabhängig davon, ob die Werkstückvorschubvorrichtung mit einer solchen zusätzlichen Bohr- und Montagevorrichtung 114 ausgestattet ist, kann die Bohrvorrichtung 50 lediglich zur Herstellung von Bohrungen ausgelegt oder auch zusätzlich mit Mitteln zur Montage von Beschlagteilen ausgestattet sein. Es ist klar, dass die Bohr- und Montagevorrichtung 114 auch eine andere geeignete Ausbildung aufweisen kann.

**Patentansprüche**

1. Werkstückvorschubvorrichtung (12) zum Anbau an Plattenaufteilmaschinen, mit einem horizontalen Plattenaufnahmetisch und einem oberhalb desselben in Vorschubrichtung verfahrbaren, insbesondere programmgesteuerten Werkstückschieber, dadurch gekennzeichnet, dass an der an den Werkstückauflagetisch (18) der Plattenaufteilmaschine (10) anzuschliessenden Seite des Plattenaufnahmetisches (28) eine horizontal und quer zur Vorschubrichtung des Werkstückschiebers (30) verstellbar und feststellbare Bohrvorrichtung (50) angeordnet ist, die mit je mindestens einer Bohrspindel (70 bzw. 72 bzw. 76) ausgestattete Bohraggregate (62; 64; 68) zum flachseitigen und/oder stirnseitigen Bohren aufweist, wobei die Bohrspindel (76 bzw. 78) zum Stirnseitigen Bohren sowohl vertikal als auch in Bewegungsrichtung des Werkstückschiebers (30) verstellbar ist.

2. Werkstückvorschubvorrichtung nach Anspruch 1, dadurch gekennzeichnet, dass die Bohrvorrichtung (50) unterhalb des Plattenaufnahmetisches (28) angeordnet ist.

3. Werkstückvorschubvorrichtung nach Anspruch 1 oder 2, dadurch gekennzeichnet, dass zum stirnseitigen Bohren zwei koaxial oder zueinander parallel angeordnete, sich in entgegengesetzte Richtungen erstreckende horizontale Bohrspindeln (76, 78) vorgesehen sind.

4. Werkstückvorschubvorrichtung nach einem der vorhergehenden Ansprüche, dadurch gekennzeichnet, dass die Bohrvorrichtung (50) mindestens zwei Vertikalbohrköpfe (62; 64) aufweist, die mit jeweils mindestens einer Reihe von Bohrspindeln (70; 72) ausgestattet sind, wobei sich die Spindelreihe (72) des einen Vertikalbohrkopfes (64) parallel zur Verstellrichtung der Bohrvorrichtung (50) und die des anderen hierzu quer erstreckt.

5. Werkstückvorschubvorrichtung nach Anspruch 4, dadurch gekennzeichnet, dass die Bohrvorrichtung (50) einen die Bohrköpfe (62; 64; 68) tragenden Trägerschlitten (52) aufweist, der entlang eines Führungsgestelles (110) horizontal verfahrbar und feststellbar ist.

6. Werkstückvorschubvorrichtung nach Anspruch 5, dadurch gekennzeichnet, dass auf dem Trägerschlitten (52) mindestens ein weiterer Vertikalbohrkopf (66) zur Herstellung eines vorbestimmten Bohrbildes angeordnet ist.

7. Werkstückvorschubvorrichtung nach Anspruch 6, dadurch gekennzeichnet, dass auf dem Trägerschlitten (52) eine Bohr- und Montagevorrichtung (88) zum selbsttätigen Montieren von Beschlagteilen angeordnet ist.

8. Werkstückvorschubvorrichtung nach einem der vorhergehenden Ansprüche, dadurch gekennzeichnet, dass, in Vorschubrichtung des Werkstückschiebers (30) gesehen, vor der Bohrvorrichtung (50) und an der einen Längsseite der Werkstückvorschubvorrichtung (12) eine Bohr- und Montagevorrichtung (114) zum selbsttätigen Montieren von Beschlagteilen od. dgl. angeordnet ist.

**Revendications**

1. Dispositif de transport de pièces (12) à monter sur des machines de répartition de plaques, comportant une table réceptrice de plaques horizontale et, au-dessus, un tiroir à pièces pouvant être déplacé dans le sens de transport des pièces et à commande programmée, caractérisé en ce qu'un dispositif de perçage (50) pouvant être fixé ou déplacé horizontalement et transversalement au sens de transport du tiroir à pièces (30), est placé sur le côté de la table réceptrice de plaques (28) attenant à la table portepièces (18) de la machine de répartition de plaques (10). Ce dispositif présente des ensembles de perçage (62, 64, 68) comportant chacun au moins un foret de perçage (70, 72, 76) pour percer à plat et/ou de front, le forêt (76 et/ou 78) pour le perçage de front pouvant être déplacé aussi bien verticalement que dans le sens du mouvement du tiroir à pièces (30).

2. Dispositif de transport de pièces selon la revendication 1, caractérisé en ce que le dispositif de perçage (50) est placé sous la table réceptrice de plaques (28).

3. Dispositif de transport de pièces selon l'une quelconque des revendication 1 ou 2, caractérisé en ce que les deux forêts horizontaux (76, 78), placés sur un même axe ou parallèlement l'un à l'autre, et partant dans des directions opposées, sont prévus pour le perçage frontal.

4. Dispositif de transport de pièces selon l'une quelconque des revendications 1 à 3, caractérisé en ce que le dispositif de perçage (50) présente au moins deux têtes de perçage verticales (62, 64) possédant chacune au moins une rangée de forets (70, 72), la rangée de forets (72) d'une tête de perçage verticale (64) partant parallèlement au sens de déplacement du dispositif de perçage (50) et celle de l'autre tête de perçage transversalement.

5. Dispositif de transport de pièces selon la revendication 4, caractérisé en ce que le dispositif de perçage (50) présente un traîneau (52) porte-têtes de perçage (62, 64, 68) qui peut être déplacé horizontalement le long du bâti de guidage (110), puis fixé.

6. Dispositif de transport de pièces selon la revendication 5, caractérisé en qu'au moins une tête de perçage verticale (66) est prévue sur le traîneau support (52) pour la réalisation d'un type de perçage prédéfini.

7. Dispositif de transport de pièces selon la revendication 6, caractérisé en ce qu'un dispositif de perçage et de montage (88) est placé sur le traîneau support (52) pour le montage automatique de pièces de références.

8. Dispositif de transport de pièces selon l'une quelconque des revendications 1 à 7, caractérisé en ce que, si l'on regarde dans le sens de transport du tiroir à pièces (30), un dispositif de perçage et de montage (114) est placé avant le dispositif de perçage (50) et sur l'une des longueurs du dispositif de transport de pièces (12) pour le montage automatique de pièces de références ou autres.

**Claims**

1. Work feeding device (12) for mounting on plate dividing machines, comprising a horizontal plate receiving table and a work slide which, in particular, is program-controlled and displaceable in the feed direction above said plate receiving table, characterized in that a boring device (50) adjustable and immobilizable horizontally and transversely to said feed direction of said work slide (30) is arranged on the side of said plate receiving table (28) to be mounted on the work supporting table (18) of said plate dividing machine (10), said boring device (50) comprising boring units (62; 64; 68) for flat face and/or end face boring equipped with at least one boring spindle each (70; 72; 76; respectively), and said boring spindle (76; 78; respectively) for end face boring being adjustable both in the vertical direction and in the direction of movement of said work slide (30).

2. Work feeding device as defined in claim 1, characterized in that said boring device (50) is arranged below said plate receiving table (28).

3. Work feeding device as defined in claim 1 or 2, characterized in that two horizontal boring spindles (76, 78) arranged coaxially or parallel to each other and extending in opposite directions are provided for the end face boring.

4. Work feeding device as defined in one of the preceding claims, characterized in that said boring device (50) comprises at least two vertical boring heads (62; 64) which are equipped with at least one row of boring spindles (70; 72) each, said spindle row (72) of the one vertical boring head (64) extending parallel to the direction of adjustment of said boring device (50) and that of the other transversely thereto.

5. Work feeding device as defined in claim 4, characterized in that said boring device (50) comprises a carrier slide (52) which carries said boring heads (62; 64; 68) and is horizontally displaceable and immobilizable along a guide frame (110).

6. Work feeding device as defined in claim 5, characterized in that at least one further vertical boring head (66) for producing a specified bore distribution is arranged on said carrier slide (52).

7. Work feeding device as defined in claim 6, characterized in that a boring and assembling device (88) for automatically assembling fittings is arranged on said carrier slide (52).

8. Work feeding device as defined in one of the preceding claims, characterized in that, seen in said feed direction of said work slide (30), a boring and assembling device (114) for automatic assembly of fittings or the like is arranged before said boring device (50) and on the one longitudinal side of said work feeding device (12).

Fig. 1

Fig. 2

*Fig. 3*

88　66　74　72　64　70　62　68′　68　76

50　52　78

Fig. 4

Fig. 5

40'

48

46

40

Fig. 6

Fig. 7

Fig. 8

*Fig. 10*

Fig. 11